# EUROPÄISCHE PATENTSCHRIFT

(11) **EP 2 547 283 B1**
(45) Veröffentlichungstag und Bekanntmachung des Hinweises auf die Patenterteilung: **01.07.2015**
(21) Anmeldenummer: 11714501.1
(22) Anmeldetag: 16.03.2011
(51) Int. Cl.: A61C 13/00

(54) **ROHLING MIT CODIERUNG ZUR HERSTELLUNG ZAHNTECHNISCHER FORMTEILE UND VERFAHREN ZUR IDENTIFIKATION EINES ROHLINGS**
BLANK WITH CODING FOR PRODUCING SHAPED PARTS FOR USE IN DENTISTRY, AND METHOD FOR IDENTIFYING A BLANK
ÉBAUCHE DOTÉE D'UN CODE POUR LA FABRICATION DE PIÈCES FAÇONNÉES DENTAIRES ET PROCÉDÉ D'IDENTIFICATION D'UNE ÉBAUCHE

(30) Priorität: 24.03.2010 US 730822; 16.03.2010 DE 102010002916
(43) Veröffentlichungstag der Anmeldung: 23.01.2013
(60) Teilanmeldung: 15165728.5
(73) Patentinhaber: Sirona Dental Systems GmbH, 64625 Bensheim (DE)
(72) Erfinder: NIEWIADOMSKI, Klaus, 63653 Lorsch (DE)
(74) Vertreter: Sommer, Peter
(86) Internationale Anmeldenummer: PCT/EP2011/053978
(87) Internationale Veröffentlichungsnummer: WO 2011/113864

(56) Entgegenhaltungen:
- DE-A1- 10 233 314
- DE-A1-102008 013 829

## Beschreibung

### Technisches Gebiet

Die Erfindung betrifft einen Rohling zur Herstellung zahntechnischer Formteile, der eine Codierung aufweist und ein Verfahren zur Erkennung eines Rohlings anhand einer Codierung.

### Stand der Technik

Zur Identifikation von Gegenständen wird eine Erkennungseinheit verwendet, die für die Bearbeitung nicht benötigt wird.

Eine Identifikation mit relativ geringem technischem Aufwand ist in der DE 10 2007 018 594 A1 beschrieben. Hierbei erfolgt die Erkennung einer am Werkstück angebrachten Zeichenfolge aus Buchstaben oder Zahlen mittels einer optischen Erkennungseinheit und anschließender Bilderkennung durch Schrifterkennung.

Die Nachteile einer solchen Identifikation sind, dass die Erkennungseinheit ein zusätzliches Bauteil ist, da sie für die Bearbeitung des Werkstücks nicht notwendig ist. Des weiteren ist die Identifikation eines Rohlings durch einen per Fotokopie erstellten Aufkleber auf dem Rohling leicht zu umgehen und in verschmutzter Umgebung ist eine Erkennung ohne Reinigung nicht zu gewährleisten.

Eine weitere Möglichkeit der Identifikation ist das Anbringen eines zusätzlichen Elements am Werkstück wie in der DE 11 2007 001 726 T5 beschrieben. Darin ist eine Antifälschungsmarkierung mit einem am Produkt angebrachten oder darin integriertem Markierer und einem elektronischen Speicherelement und das zugehörige Verfahren, bei dem die Daten in dem Speicherelement im Gebrauch durch eine Lesevorrichtung gelesen werden, beschrieben.

Allerdings ist auch hier die Lesevorrichtung ein zusätzliches Bauteil, welches für die Bearbeitung des Werkstücks nicht notwendig ist. Des Weiteren erfordert die Beschränkung der Erkennung auf den Bearbeitungsraum der Werkzeugmaschine einen zusätzlichen Aufwand.

Eine Möglichkeit der Identifikation ohne Anbringen einer Kennzeichnung oder eines zusätzlichen Elements am Werkstück ist in der DE 101 55 780 A1 beschrieben. Hierbei wird ein bei der Herstellung eines zu sichernden Gegenstandes zufällig entstehendes oder bewusst aufgebrachtes nicht reproduzierbares körperliches Zufallmuster z.B. in Form von Schlieren oder Marmorierung am Gegenstand mit einem Sensor abgetastet. Da die Zufallsmuster eine relativ hohe Auflösung des Sensors bedingen, wird als Sensor eine Kamera vorgeschlagen. Allerdings ist auch hier ein zusätzliches Bauteil, nämlich der Sensor notwendig, der für die Bearbeitung des Werkstücks nicht notwendig ist. Des Weiteren ist die Erkennung in verschmutzter Umgebung ohne Reinigung nicht zu gewährleisten. Weitere in der genannten Patentanmeldung beschriebene Verfahren werten intrinsische Oberflächenstrukturen oder Hologramme optisch über Beugungsmuster oder Interferenzen aus. Die hierfür erforderlichen Sensoren bzw. Auswerteverfahren sind für die Bearbeitung des Werkstücks nicht notwendig und stellen einen hohen Kostenfaktor für die Werkzeugmaschine dar. Des Weiteren ist die Erkennung in verschmutzter Umgebung ohne Reinigung nicht gewährleistet.

Die WO 99/13796 beschreibt einen Rohling mit Identifikationscode und ein Verfahren zur Herstellung von Dentalrestaurationen, welches vorsieht Informationen über die Geometrie des gewünschten Zahnersatzteils mit Informationen über die Geometrien der verfügbaren Rohlinge zu vergleichen, um denjenigen Rohling auszuwählen, der bezüglich der Farbe und der Geometrie am besten zur geplanten Dentalrestauration passt. Die Code-Informationen können auf dem Rohling angeordnet sein, beispielsweise in Form eines Barcodes oder einer Nut oder eines Kamms. Dementsprechend ist auch für dieses System eine zusätzliche Vorrichtung zum Auslesen der kodierten Informationen notwendig.

Des Weiteren wird in der WO 99/13796 ein Rohling beschrieben, der eine Ausnehmung am Rohlingskörper aufweist, die eine automatische Erkennung der richtigen Positionierung des Rohlings in einer Bearbeitungsmaschine ermöglicht.

Aus der DE 10 2008 013 829 A1 ist ein Rohling zur Herstellung zahntechnischer Formteile bekannt, der eine Codierung mit mindestens einer Struktur als Informationsträger für Eigenschaften des Rohlingskörpers aufweist, wobei die Abmessung oder die Art der Struktur durch Abtasten oder Vermessen des Rohlings feststellbar ist.

Bei der beschriebenen Struktur handelt es sich allerdings um eine Struktur, welche als Information einen Wert, z.B. die Länge des Rohlingskörpers, analog wiedergibt.

Ein Rohling mit einer Struktur in Form einer Einkerbung bzw. Vertiefung am Rohlingskörper ist aus der WO 01/35854 bekannt, wobei die Einkerbung zur Ausrichtung des Rohlingskörpers in der Werkzeugmaschine verwendbar ist.

Der Erfindung liegt die Aufgabe zugrunde, einen Rohling mit einer Codierung und ein Verfahren zur Identifikation des Rohlings bereitzustellen, welches ohne weitere bauliche Komponenten auskommt.

### Darstellung der Erfindung

Ein erfindungsgemäßer Rohling zur Herstellung zahntechnischer Formteile weist einen Rohlingskörper aus Zahnrestaurationsmaterial auf, aus welchem mittels eines Werkzeugs das herzustellende Formteil durch Materialabtrag herausarbeitbar ist. Der Rohling weist eine an einem Teil der Oberfläche des Rohlingskörpers ausgebildete Codierung mit mindestens einer Struktur zur Identifikation des Rohlings auf. Die Codierung ist aus mehreren Feldern der Oberfläche des Rohlingskörpers und aus mehreren Feldern mit flächiger Struktur mit einer zumindest gegenüber der Oberfläche des Rohlingskörpers unterscheidbaren Höhe gebildet, wobei die Felder mit Struktur einen Teil der Felder der Oberfläche umschließen oder diese zumindest teilweise umgeben. In der Codierung sind mindestens ein Feld mit Struktur mit einer ersten Höhendifferenz gegenüber der Oberfläche und mindestens ein Feld mit Struktur mit einer zweiten Höhendifferenz gegenüber der Oberfläche enthalten. Mindestens ein Feld mit Struktur mit einer ersten Höhendifferenz ist gegenüber der Oberfläche zu einem Feld mit Struktur mit einer zweiten Höhendifferenz gegenüber der Oberfläche benachbart. Die beiden Felder mit Struktur bilden derart ein Paar, dass paarweise eine Höhendifferenz vorhanden ist.

Durch die erfindungsgemäße dreidimensionale Gestaltung der Codierung, die beispielsweise ein Wort oder ein Bild wiedergeben kann, und durch die zugehörige Auswertung können die Bearbeitungswerkzeuge der Werkzeugmaschine selbst oder in bzw. an der Werkzeugaufnahme der Werkzeugmaschine angebrachte Kalibriervorrichtungen zur Erkennung des Werkstücks verwendet werden.

Insbesondere bei gepressten Werkstücken kann die Kennzeichnung in der Werkzeugmaschine hinterlegt sein, so dass für die Identifikation des einzelnen Werkstücks, also eines erfindungsgemäßen Rohlings keine zusätzlichen Bauteile und damit Zusatzkosten entstehen.

Das Vorsehen von Strukturen mit verschiedenen Höhendifferenzen gegenüber der Oberfläche ermöglicht das Erzeugen von komplexeren Codierungen. Die Codierung weist dadurch verschiedene Höhendifferenzen zwischen verschiedenen Feldern auf.

Das Vorsehen verschiedener Höhendifferenzen gegenüber der Oberfläche ermöglicht eine höhere Flexibilität hinsichtlich der Bildung von Paaren bzw. hinsichtlich der Höhendifferenzen, welche innerhalb der Codierung auftreten und dazu geeignet sind, für die Identifikation des Rohlingskörpers anhand der Codierung herangezogen zu werden.

Vorteilhafterweise kann die Struktur eine flächige Vertiefung und/oder als flächige Erhöhung gegenüber der Oberfläche sein, wobei die Vertiefung einen Boden und die Erhöhung ein Dach aufweist, wobei Boden und Dach zumindest näherungsweise parallel zur Oberfläche sind.

Durch das Ausbilden der Strukturen als bezeichnete Erhöhung oder Vertiefung wird innerhalb der Codierung ein Bereich mit einer definierten, von der Oberfläche verschiedenen Höhe bereit gestellt. Um eine eindeutige Höhendifferenz einer Struktur gegenüber der Oberfläche zu erhalten, ist es notwendig, dass die Struktur als abzutastende Fläche eine zur Oberfläche parallel versetzte Fläche aufweist.

Vorteilhafterweise kann jedes Feld mit Struktur zu mindestens einem Feld der Oberfläche benachbart sein. Bei einer entsprechend ausgebildeten Codierung ist es möglich, dass alle Felder mit Struktur mit einem benachbarten Feld der Oberfläche derart ein Paar bilden, dass paarweise eine Höhendifferenz vorhanden ist. Eine entsprechende Codierung ermöglicht also ein Heranziehen aller Felder mit Struktur zur Identifikation durch eine möglichst fehleroptimierte Abtastung entsprechend gebildeter Paare, wodurch die Eindeutigkeit der Identifikation der Codierung erhöht wird.

Vorteilhafterweise kann die Codierung mindestens ein Feld aufweisen, das nur an Felder gleicher Art angrenzt. Dies ist ein weiteres Merkmal, welches notwendig sein kann, um ein bestimmtes Wort oder Bild innerhalb der Codierung darzustellen. Je nach dem ob beispielsweise ein Wort anhand von Linien aus Feldern mit Struktur oder aus Feldern der Oberfläche innerhalb der Codierung dargestellt werden soll, ist es notwendig Zwischenräume flächig durch Felder der anderen Spezies zu füllen. Dabei kann es notwendig sein, dass Felder nur von Feldern gleicher Art umgeben sind.

Vorteilhafterweise weist jede Struktur eine Fläche zwischen 0,05 mm² und 10 mm² auf. So können auch auf kleineren Rohlingskörpern Codierungen mit mehreren Feldern bereitgestellt werden, was die Eindeutigkeit einer Codierung erhöht. Es kann weiterhin sichergestellt werden, dass die Strukturen mit einem Werkzeug abtastbar sind, wobei es wegen der geringen Tiefe einer Struktur ausreicht, wenn der Durchmesser der Struktur größer als der Durchmesser der Spitze des Werkzeugs ist. Die Fläche bzw. der Durchmesser kann daher kleiner als der Nenndurchmesser des Werkzeugs sein.

Vorteilhafterweise beträgt die gegenüber der Oberfläche (6) des Rohlingskörpers (2) unterscheidbare Höhe (h1, h2) jeder Struktur (8, 9) maximal 500µm. Durch eine möglichst geringe Tiefe entsteht keine merkliche Einschränkung für die Ausnutzung des Rohlingskörpers. Allerdings muss die Vertiefung bzw. die Erhöhung mindestens so groß sein, dass sie beispielsweise von einem in der Werkzeugmaschine vorhandenen Wegemesssystem erfasst und eindeutig bestimmt werden kann.

Vorteilhafterweise kann der Rohlingskörper an einer Halterung angeordnet und die Codierung an einem halterseitigen Ende des Rohlings angeordnet sein. Dadurch kann auch noch bei angeschliffenen, also teilweise genutzten Rohlingskörpern eine Identifikation mittels der Codierung durchgeführt werden. Je mehr Bereiche der Codierung noch für die Identifikation zur Verfügung stehen, um so eindeutiger und sicherer ist die Identifikation. Es können auch noch auf einem Blockrest befindliche Restbereiche zur Identifikation herangezogen werden, beispielsweise wenn Teile der Codierung aufgrund der Bearbeitung des Blocks bereits abgetragen sind.

Vorteilhafterweise kann die Codierung mindestens fünf Felder mit Struktur aufweisen. Eine ausreichende Anzahl von Feldern und vor allem von Feldern mit Struktur ermöglicht es, in der Codierung erkennbar ein Wort oder ein Bild anhand von Feldern mit Struktur darzustellen. Des Weiteren erhöht eine größere Anzahl von Feldern insgesamt wie auch eine größere Anzahl von Strukturen innerhalb der Codierung die Komplexität und damit auch die Eindeutigkeit der Codierung.

Weiterhin betrifft die Erfindung ein Verfahren zur Identifikation eines Rohlings mit einem Rohlingskörper aus Zahnrestaurationsmaterial zur Herstellung eines zahntechnischen Formteils durch Materialabtrag mittels eines in einer Werkzeugaufnahme gehaltenen Werkzeugs einer Werkzeugmaschine, wobei eine in der Oberfläche des Rohlings angeordnete Codierung mit Strukturen mittels des in der Werkzeughalterung gehaltenen Werkzeugs oder eines in der Werkzeughalterung gehaltenen Kalibrierstifts abgetastet wird. Die Abtastung der Codierung, die aus mehreren Feldern der Oberfläche des Rohlingskörpers und mehreren Feldern mit flächiger Struktur mit zumindest gegenüber der Oberfläche des Rohlingskörpers verschiedener Höhe gebildet ist, erfolgt so, dass mindestens ein erstes Feld der Codierung abgetastet wird, indem das Werkzeug oder der Kalibrierstift in der x-y-Ebene zentrisch vor einem bestimmten, beliebigen oder per Zufall ausgewählten Feld der Codierung positioniert wird, dessen x-y-Position durch die vorbekannte Positionierung des Werkzeugs oder des Kalibrierstifts in der x-y-Ebene gegeben ist. Ausgehend vom ersten Feld wird ein zweites Feld aus einer hinterlegten Zuordnungsliste von Paaren aus erstem und zweitem Feld ermittelt und ebenfalls abgetastet. Es wird eine Höhendif) ferenz zwischen den beiden Feldern der Codierung festgestellt und aus der Höhendifferenz wird ein paarbezogener Vergleichswert gewonnenen, der zur Identifikation herangezogen wird, indem der Vergleichswert mit einem paarbezogenen Erwartungswert verglichen wird. Bei Übereinstimmung wird die positive Identifikation angenommen.

Es ist also vorgesehen, dass ein Paar aus einem Feld mit Struktur mit einer ersten Höhendifferenz gegenüber der Oberfläche und einem Feld mit Struktur mit einer zweiten Höhendifferenz gebildet ist. Zur Identifikation werden durch Abtasten von Feldpaaren Höhendifferenzen bestimmt. Solch Höhendifferenzen erschweren es eine Codierung zu fälschen und tragen daher zur Eindeutigkeit der Codierung bei.

Die beiden Felder eines Paars sind zueinander benachbart. Durch die räumliche Nähe der Partner werden Fehler bei der Bestimmung der Höhendifferenz verringert, die beispielsweise aufgrund eines nicht genau senkrecht auf die Oberfläche des Rohlingskörpers ausgerichteten Werkzeugs beim Abtasten auftreten. Dies erhöht die Messgenauigkeit.

Durch die vorliegende Erfindung ist die sichere Erkennung eines in einer CAD/CAM- oder CNC-Werkzeugmaschine eingesetzten Werkstücks ohne zusätzliche, für die Bearbeitung nicht notwendige Komponenten möglich.

Durch die erfindungsgemäße dreidimensionale Gestaltung der Codierung und der zugehörigen Auswertung können die Bearbeitungswerkzeuge der Werkzeugmaschine selbst oder auch eine in der Werkzeughalterung der Werkzeugmaschine gehaltene Kalibriervorrichtung zur Erkennung des Werkstücks verwendet werden. Dies führt zu einer erheblichen Steigerung der Auswertesicherheit in verschmutzter Umgebung und einer Kostenreduzierung.

Durch die vorliegende Erfindung wird ein in einer Werkzeugmaschine eingesetztes Werkstück auf dessen als Codierung vorgenommene Kennzeichnung als "zertifiziertes Werkstück" durch die Bearbeitungswerkzeuge selbst, ohne zusätzliche für die Bearbeitung nicht benötigte Komponenten, wie z.B. eine optische Erkennungseinheit, überprüft. Für die Realisierung der Prüfung fallen daher keine zusätzlichen Kosten in der Werkzeugmaschine an.

Ein sicherer Schutz vor "nicht zertifizierten" Werkstücken kann nur dadurch ermöglicht werden, dass die Prüfung des Werkstücks in der Werkzeugmaschine selbst unmittelbar vor dem Start der Bearbeitung stattfindet.

Zur Verhinderung einer Manipulation des Werkstücks während einer Bearbeitungspause kann die Prüfung auch nach einer Unterbrechung des Bearbeitungsprozesses z.B. wegen Werkzeugbruch bei dessen Wiederaufnahme stattfinden.

Eine optische oder kapazitive Prüfung scheitert hier an den Schleif- oder Kühlmittelrückständen. Selbst mit einem erheblichen technischen Aufwand bei Soft- oder Hardware kann eine sichere Erkennung ohne die Reinigung des Werkstücks und der Erkennungseinheit vor Wiederaufnahme der Bearbeitung nicht sicher gewährleistet werden.

Eine induktive Prüfung benötigt eine entsprechende Materialeigenschaft, die beispielsweise bei Keramikblocks nicht vorhanden oder nur durch gezielte Verunreinigungen zu erreichen ist, oder eine zusätzliche Komponente am Werkstück mit induktivem Verhalten. Die sichere Erkennung ist auch hier, auf Grund möglicher Schleifrückstände, ohne Reinigung nicht gewährleistet.

Eine funktechnische Prüfung, z.B. mittels RFID, erfordert neben der Erkennungseinheit eine zusätzliche Komponente auf dem Werkstück selbst.

Zur Vermeidung einer Manipulation sollte der Wirkungsbereich der Prüfung außerdem auf einen kleinen Bereich innerhalb der Werkzeugmaschine beschränkt werden.

Die vorgenannten Fehlerquellen können durch die mechanische Prüfung durch ein Bearbeitungswerkzeug oder eine Kalibriervorrichtung entsprechend dem erfindungsgemäßen Verfahren vermieden werden.

Da aus Sicherheitsgründen die Bearbeitungskammer der Werkzeugmaschine während einer Bearbeitung immer verschlossen sein muss, ist bei der Erkennung des Werkstücks durch die Bearbeitungswerkzeuge selbst oder eine in der Werkzeugaufnahme gehaltene Kalibriervorrichtung eine Manipulation nahezu ausgeschlossen.

Die Bearbeitung von nicht zertifizierten, also nicht in richtiger Weise codierten Werkstücken kann beispielsweise dadurch verhindert werden, dass eine Bearbeitung nur gestartet wird, wenn ein zertifiziertes Werkstück erkannt wurde.

Die Paare aus erstem und zweitem Feld der Codierung können beispielsweise in einer Zuordnungsliste auf einem Steuerrechner oder in der Werkzeugmaschine selbst hinterlegt sein. Letzteres ermöglicht es, die Prüfung und Verarbeitung der gewonnenen Information in der Werkzeugmaschine selbst vorzunehmen. Auf diese Weise wird sichergestellt, dass keine Beeinträchtigung der Funktion durch eine Manipulation des Datenverkehrs zwischen der Werkzeugmaschine und einem Steuerrechner möglich ist.

Vorteilhafterweise können mindestens zwei Paare der Codierung abgetastet werden. Sowohl die Sicherheit der Identifikation als auch die Dauer des Verfahrens hängen wesentlich von der Anzahl der Paare ab, die abgetastet werden. Je mehr Paare abgetastet werden, um so höher ist die Eindeutigkeit der Identifikation und um so langwieriger ist das Verfahren. Hier gilt es abzuwägen.

Vorteilhafterweise können mindestens fünf Paare vorhanden sein, aus denen die abzutastenden Paare und/oder der zuerst zu prüfende Feld eines Paars zufällig ausgewählt werden. Sind nicht alle Felder einem Paar zugeordnet und/oder werden nicht alle Paare abgetastet, so erhöht das zufällige auswählen der Paare und/oder des zuerst zu prüfenden Partners die Eindeutigkeit der Identifikation und damit Sicherheit des Verfahrens.

Es ist möglich, zu jedem Feld mit Struktur ein weiteres Feld der Codierung, mit dem es ein Paar bildet, zu hinterlegen. Durch die Berücksichtigung aller Felder mit Struktur bei der Paarbildung wird für eine Codierung, die beispielsweise ein Wort oder ein Bild durch aus Feldern mit Struktur gebildeten Linien wiedergibt, die Eindeutigkeit der Identifikation mittels des erfindungsgemäßen Verfahrens erhöht.

### Kurze Beschreibung der Zeichnungen

Das erfindungsgemäße Verfahren wird anhand der Zeichnung erläutert. Es zeigen:
- Fig. 1: einen Rohling mit einem Rohlingskörper mit Codierung,
- Fig. 2: einen Schnitt durch den Rohlingskörper aus Fig. 1,
- Fig. 3: eine an eine Struktur eines Rohlingskörpers herangebrachte Werkzeugspitze,
- Fig. 4: die Codierung aus Fig. 1,
- Fig. 5: eine Zuordnungsliste und dazu hinterlegte Erwartungswerte.

### Ausführungsbeispiel der Erfindung

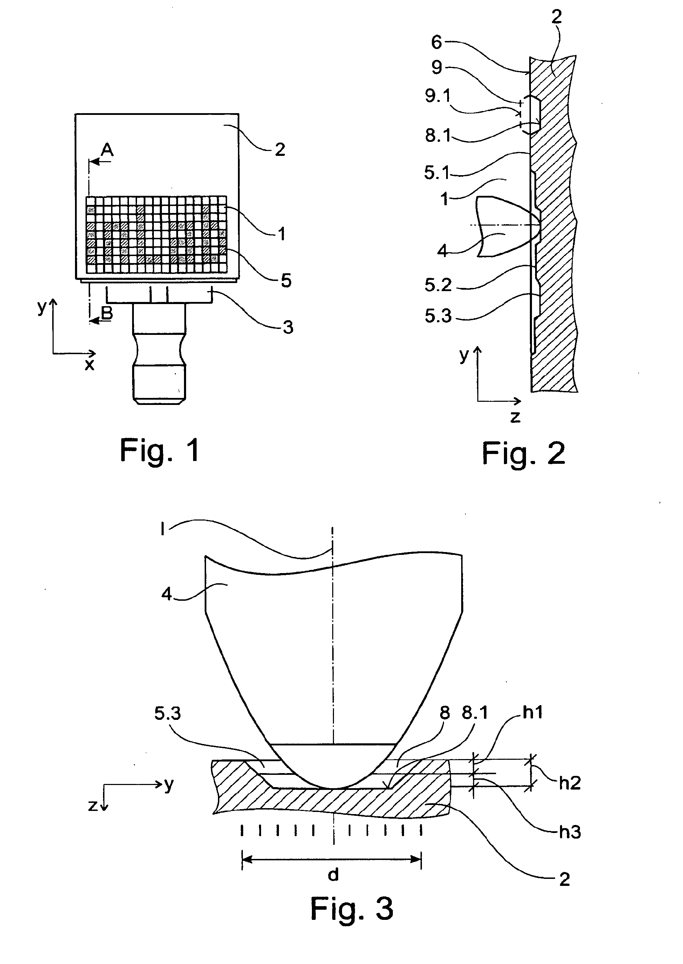

In Fig. 1 ist ein Rohling bestehend aus einem auf einem Halter 3 angeordneten Rohlingskörper 2 dargestellt. Der Rohlingskörper 2 weist eine Codierung 1 auf, die dreidimensional so gestaltet und am halterseitigen Ende des Rohlingskörpers 2 angebracht ist, dass sie unter Zuhilfenahme der vorhandenen Bearbeitungswerkzeuge 4 oder Kalibrier- oder Positionierhilfen, wie in den Fig. 2 und 3 dargestellt, abgetastet und eindeutig erkannt werden kann.

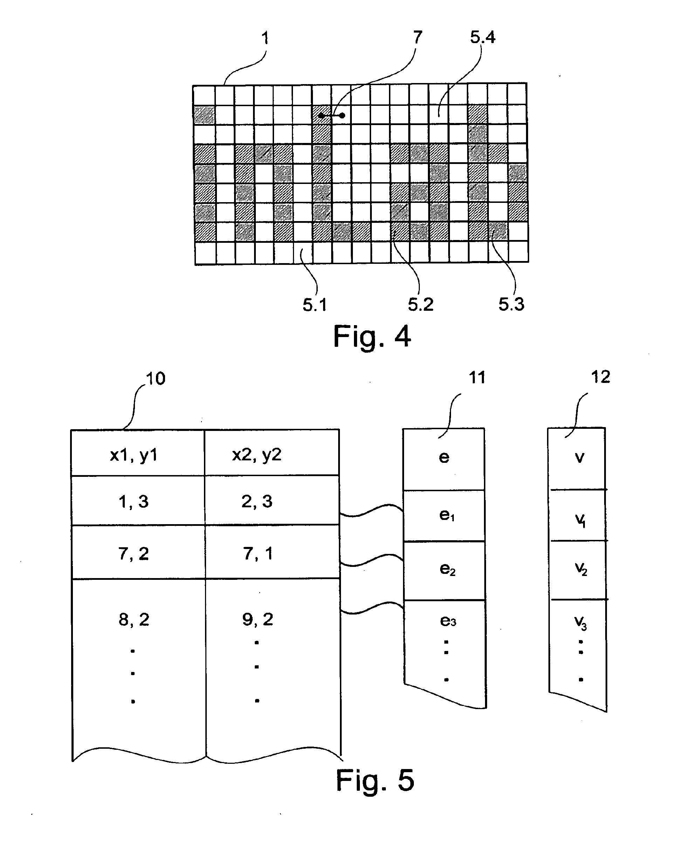

Die Codierung 1 ist hierzu erfindungsgemäß als sich flächig in einer x-y-Ebene erstreckender Bereich auf dem Rohlingskörper 2 ausgebildet, der beispielsweise in gleichförmige Felder 5 eingeteilt ist, wie sie in Fig. 4 skizziert sind.

In Fig. 2 ist ein Schnitt des Rohlingskörpers 2 aus Fig. 1 entlang der Linie AB dargestellt. Es ist zu erkennen, dass einige der Felder 5.2, 5.3 als Strukturen 8, 9 beispielsweise in Form von Vertiefungen 8 gegenüber der Oberfläche 6 mit einem in Richtung der z-Achse abgesenkten Boden 8.1 ausgebildet sind. Die Strukturen 8, 9 können aber auch als Erhöhungen 9 mit einem in Richtung der z-Achse erhöhten Dach 9.1 ausgebildet sein, wie es mit gestrichelten Linien angedeutet ist.

Einige Felder 5.1 der Codierung 1 entsprechen der Oberfläche 6 des Rohlingskörpers.

Die Lage und die Form der Felder 5 der Codierung 1 im Rohlingskörper 2, insbesondere die Verteilung der Strukturen 8, 9 innerhalb der Codierung 1 sind so definiert, dass beispielsweise ein Wort oder ein Bild innerhalb der Codierung 1 erkennbar wiedergegeben ist. Dies geschieht beispielsweise indem die Linien der Buchstaben eines Worts durch entsprechend benachbarte Felder 5.2, 5.3 mit Struktur 8, 9 wiedergegeben werden, während die Zwischenräume durch Felder 5.1 der Oberfläche 6 flächig aufgefüllt sind. Durch das flächige Ausfüllen weist die Codierung Felder 5.4 auf, die nur von Feldern gleicher Art umgeben sind, wie es in Fig. 4 beispielsweise für einige Felder 5.1 der Oberfläche der Fall ist.

In Fig. 3 ist ein Werkzeug 4 beim Abtasten eines Felds 5.3 Struktur 8, 9 in Form einer Vertiefung 8 dargestellt. Die Strukturen 8, 9 sind erfindungsgemäß geometrisch so gestaltet und weisen einen entsprechenden Durchmesser d auf so dass ein Bearbeitungswerkzeug 4 oder eine Kalibrierhilfe vollständig bis zum Boden 8.1 oder bis auf das Dach 9.1 einer solchen Struktur 8, 9 vorfahren kann, ohne die seitlichen Begrenzungen dieses oder eines benachbarten Felds 5 zu berühren.

Der absolute Wert der Vertiefung 8 oder Erhöhung 9 der Struktur 8, 9 ist so ausgelegt, dass keine merkliche Einschränkung in der Ausnutzung des Rohlingskörpers 2 entsteht und der Wert, also die Höhendifferenz h1, h2 der Vertiefung 8 oder Erhöhung 9 trotzdem von dem in der Werkzeugmaschine vorhandenem Wegmesssystem sicher erfasst werden kann.

Die als Vertiefungen 8 ausgebildeten Strukturen 8, 9 im Ausführungsbeispiel können beispielsweise in Stufen von ca. 100µm ausgeführt sein, so dass beispielsweise die Höhendifferenz eines Felds 5.2 mit Struktur 8, 9 gegenüber der Oberfläche 2 100µm beträgt und die Höhendifferenz eines Felds 5.3 mit Struktur 8, 9 200µm beträgt.

Das Werkzeug 4 oder die Kalibrierhilfe der Werkzeugmaschine wird in der x-y-Ebene zentrisch vor einem bestimmten, beliebigen oder per Zufall ausgewählten Feld 5 der hier als Wort ausgestalteten Codierung 1 positioniert und dann entlang der Längsachse 1 des Werkzeugs 4 bzw. der Kalibrierhilfe, die der in den Figuren eingezeichneten z-Achse entspricht, in Richtung des Werkstücks 2 verfahren.

Das Erreichen des Rohlingskörpers 2 mit der Vorderseite, also der Spitze des Werkzeugs 4 oder der Vorderseite der Kalibrierhilfe in diesem Feld 5 wird entweder über die vorhandene Lastregelung/-steuerung des Werkzeugs 4 bzw. der Kalibrierhilfe oder über einen sonstigen vorhandenen Sensor der Regelung/Steuerung z.B. Kraftsensor in der Längsachse 1 des Werkzeugs 4 oder der Kalibrierhilfe detektiert.

Durch die bei jeder CAD/CAM-Werkzeugmaschine oder auch CNC-Werkzeugmaschine vorhandene Wegerkennung ist der Absolutwert der Position des Werkzeugs 4 bzw. der Kalibrierhilfe dieses Felds 5 im Raum bei der Detektion als erste Position bestimmt.

Die x-y-Position ist durch die vorbekannte Positionierung des Werkzeugs 4 oder der Kalibrierhilfe in dieser Ebene gegeben. Die z-Position ergibt sich bei der Detektion.

Danach wird ausgehend vom ersten Feld 5 ein zweites Feld 5, also eine zweite Position in der x-y-Ebene ermittelt. Dies geschieht anhand einer Zuordnungsliste 10, wie sie in Fig. 5 beispielhaft dargestellt ist, in der einem ersten Feld 5 ein zweites Feld 5 zugeordnet wird, wobei die beiden Felder 5 ein so genanntes Paar 7 bilden. Ein solches Paar 7 ist beispielhaft in Fig. 4 skizziert. Das Ermitteln des zweiten Felds 2 anhand der Zuordnungsliste 10 kann beispielsweise direkt in der Werkzeugmaschine geschehen, indem unter anderem die Zuordnungsliste 10 in der Werkzeugmaschine selbst hinterlegt ist. Natürlich kann die Zuordnungsliste 10 auch auf einem Steuerrechner hinterlegt sein und die Ermittlung des zweiten Felds 5 durch eine entsprechende Kommunikation zwischen Werkzugmaschine und Steuerrechner geschehen.

Das Werkzeug 4 oder die Kalibrierhilfe der Werkzeugmaschine wird vor dem zweiten Feld 5 in der x-y-Ebene positioniert und die absolute Position dieses weiteren Felds 5 im Raum als zweite Position auf gleiche Weise bestimmt.

Diese Paare 7 aus erstem und zweiten Feld 5 sind vorbestimmt. Die Paare 7 können beispielsweise immer aus einem eine Struktur 8, 9 aufweisenden Feld 5.2, 5.3 und einem der Oberfläche 6 des Rohlingskörpers 2 entsprechenden Feld 5.1 bestehen entsprechend dem in Fig. 4 eingezeichneten Paar 7. Die Codierung 1 kann beispielsweise nur Felder 5 aufweisen, welche höchstens einem Paar 7 zugeordnet sind. Es kann aber auch eine Codierung 1 mit einer Zuordnungsliste 10 vorgesehen werden, die einzelnen Feldern 5 mehrere Partner zuordnet, beispielsweise einen ersten Partner, mit dem das bezeichnete Feld 5 ein Paar 7 bildet, wenn es als erstes Feld 5 getestet wird und einen zweiten Partner, mit dem das bezeichnete Feld 5 ein Paar 7 bildet, wenn es als zweites Feld 5 abgetastet wird.

Die Höhendifferenz h1, h2, h3 der beiden zu den zwei Feldern 5 eines Paars 7 bestimmten Positionen, also die Differenz des z-Werts der ersten Position und des z-Werts der zweiten Position bildet beispielsweise direkt einen Vergleichswert v, der mit einem Erwartungswert e der Höhendifferenz dieser beiden Felder 5, also dieses Paars 7, verglichen wird. Das Ergebnis kann entweder sofort für die Entscheidung über eine Weiterbearbeitung des Werkstücks 2 verwendet oder für eine Auswertung nach Ermittelung weiterer Differenzen abgespeichert werden. Die Erwartungswerte e können beispielsweise in einer mit der Zuordnungsliste 10 verknüpften Liste 11 der Erwartungswerte e hinterlegt sein, wie es in Fig. 5 skizziert ist.

Das Vorsehen von Paaren 7 aus benachbarten Feldern 5 hat den Vorteil, dass ein Winkelfehler der Längsachse 1 des Werkzeugs 4 bzw. der Kalibrierhilfe gegenüber der x-y-Ebene des Rohlingskörpers 2 nur einen sehr geringen Einfluss auf die ermittelte Höhendifferenz hat.

Die Ermittlung weiterer Höhendifferenzen h1, h2, h3 erfolgt in gleicher Weise an weiteren Paaren 7, wobei die Auswahl der Paare 7 bzw. der zuerst abzutastenden Felder 5 eines Paars 7 zufällig vorgenommen werden kann. Dies kann beispielsweise durch die Werkzeugmaschine selbst geschehen.

Die Anzahl der ermittelten Höhendifferenzen h1, h2, h3 ist abhängig von der Anzahl der Felder 5 und der gewünschten Sicherheit gegenüber einer Fälschung. Je mehr Felder 5 eine Codierung 1 aufweist und je größer der Anteil der abgetasteten Felder 5 im Vergleich zu den nicht abgetasteten Felder 5 einer Codierung 1 ist, um so sicherer ist die durch die Abtastung durchgeführte Identifikation.

Eine Auswertung der ermittelten Vergleichswerte v kann beispielsweise erst nach der Ermittelung der gewünschten Anzahl von Höhendifferenzen h1, h2, h3 und der Bestimmung der entsprechenden Vergleichswerten v erfolgen. Hierzu können die jeweils ermittelten Vergleichswerte v in einer Liste 12 der Vergleichswerte v abgespeichert werden, wie sie in Fig. 5 skizziert ist.

Die Durchführung des erfindungsgemäßen Verfahrens ermöglicht es, beispielsweise aufgrund von zu hohen Abweichungen einzelner Vergleichswerte v oder der Summe der Werte die Bearbeitung nicht zu starten und dadurch das Verarbeiten von nicht in richtiger Weise codierten Rohlingskörpern 2 in einer Verarbeitungsmaschine, welche das Verfahren durchführt, zu verhindern.

### Bezugszeichenliste

- 1: Codierung
- 2: Rohlingskörper
- 3: Halter
- 4: Werkzeug
- 5: Feld
- 5.1: Feld der Oberfläche
- 5.2: Feld mit Struktur mit einer ersten Höhendifferenz gegenüber der Oberfläche
- 5.3: Feld mit Struktur mit einer ersten Höhendifferenz gegenüber der Oberfläche
- 5.4: Feld, das nur an Felder gleicher Art angrenzt
- 6: Oberfläche des Rohlingskörpers
- 7: Paar
- 8: Vertiefung
- 8.1: Boden
- 9: Erhöhung
- 9.1: Dach
- 10: Zuordnungsliste
- 11: Liste der Erwartungswerte
- 12: Liste der Vergleichswerte
- d: Durchmesser
- e: Erwartungswert
- h1: erste Höhendifferenz
- h2: zweite Höhendifferenz
- h3: Höhendifferenz
- l: Längsachse des Werkzeugs
- v: Vergleichswert

## Patentansprüche

1. Rohling zur Herstellung zahntechnischer Formteile, wobei der Rohling einen Rohlingskörper (2) aus Zahnrestaurationsmaterial aufweist, aus welchem mittels eines Werkzeugs (4) das herzustellende Formteil durch Materialabtrag herausarbeitbar ist, wobei der Rohling eine an einem Teil der Oberfläche (6) des Rohlingskörpers (2) ausgebildete Codierung (1) mit mindestens einer Struktur (8, 9) zur Identifikation des Rohlings aufweist, wobei die Codierung (1) aus mehreren Feldern (5.1) der Oberfläche (6) des Rohlingskörpers (2) und aus mehreren Feldern (5.2, 5.3) mit flächiger Struktur (8, 9) mit einer zumindest gegenüber der Oberfläche (6) des Rohlingskörpers (2) unterscheidbaren Höhe (h1, h2) gebildet ist, wobei die Felder (5.2, 5.3) mit Struktur (8, 9) einen Teil der Felder (5.1) der Oberfläche (6) umschließen oder diese zumindest teilweise umgeben und wobei in der Codierung (1) mindestens ein Feld (5.2) mit Struktur (8, 9) mit einer ersten Höhendifferenz (h1) gegenüber der Oberfläche (6) und mindestens ein Feld (5.3) mit Struktur (8, 9) mit einer zweiten Höhendifferenz (h2) gegenüber der Oberfläche (6) enthalten sind, **dadurch gekennzeichnet, dass** mindestens ein Feld (5.2) mit Struktur (8, 9) mit einer ersten Höhendifferenz (h1) gegenüber der Oberfläche (6) zu mindestens einem Feld (5.3) mit Struktur (8, 9) mit einer zweiten Höhendifferenz (h2) gegenüber der Oberfläche (6) benachbart ist, wobei die beiden Felder (5.2, 5.3) mit Struktur (8, 9) derart ein Paar (7) bilden, dass paarweise eine Höhendifferenz (h3) vorhanden ist.

2. Rohling nach Anspruch 1, **dadurch gekennzeichnet, dass** die Struktur (8, 9) eine flächige Vertiefung (8) gegenüber der Oberfläche (6) ist, wobei die Vertiefung (8) einen Boden (8.1) aufweist, der zumindest näherungsweise parallel zur Oberfläche (6) ist.

3. Rohling nach Anspruch 1, **dadurch gekennzeichnet, dass** die Struktur (8, 9) eine flächige Erhöhung (9) gegenüber der Oberfläche (6) ist, wobei die Erhöhung (9) ein Dach (9.1) aufweist, das zumindest näherungsweise parallel zur Oberfläche (6) ist.

4. Rohling nach einem der Ansprüche 1 bis 3, **dadurch gekennzeichnet, dass** jedes Feld (5.2, 5.3) mit Struktur (8, 9) zu mindestens einem Feld (5.1) der Oberfläche (6) benachbart ist.

5. Rohling nach einem der Ansprüche 1 bis 4, **dadurch gekennzeichnet, dass** die Codierung (1) mindestens ein Feld (5.4) aufweist, das nur an Felder (5.1, 5.2, 5.3, 5.4) gleicher Art angrenzt.

6. Rohling nach einem der Ansprüche 1 bis 5, **dadurch gekennzeichnet, dass** jede Struktur (8, 9) eine Fläche zwischen 0,05 mm² und 10 mm² aufweist.

7. Rohling nach einem der Ansprüche 1 bis 6, **dadurch gekennzeichnet, dass** die gegenüber der Oberfläche (6) des Rohlingskörpers (2) unterscheidbare Höhe (h1, h2) jeder Struktur (8, 9) maximal 500µm beträgt.

8. Rohling nach einem der Ansprüche 1 bis 7, **dadurch gekennzeichnet, dass** der Rohlingskörper (2) an einem Halter (3) angeordnet ist und die Codierung (1) an einem halterseitigen Ende des Rohlingskörpers (2) angeordnet ist.

9. Rohling nach einem der Ansprüche 1 bis 8, **dadurch gekennzeichnet, dass** die Codierung (1) mindestens fünf Felder (5.2, 5.3) mit Struktur (8, 9) aufweist.

10. Verfahren zur Identifikation eines Rohlings nach einem der Ansprüche 1, bis 9, wobei die Abtastung der Codierung (1) so erfolgt, dass
- mindestens ein erstes Feld (5.1, 5.2, 5.3, 5.4) der Codierung (1) abgetastet wird, indem das Werkzeug oder der Kalibrierstift in der x-y-Ebene zentrisch vor einem bestimmten Feld (5.1, 5.2, 5.3, 5.4) der Codierung (1) oder vor einem beliebigen oder per Zufall ausgewählten Feld (5.1, 5.2, 5.3, 5.4) der Codierung (1), dessen x-y-Position durch die vorbekannte Positionierung des Werkzeugs oder des Kalibrierstifts in der x-y- Ebene gegeben ist, positioniert wird, dass
- ausgehend vom ersten Feld (5) ein zweites Feld (5.1, 5.2, 5.3, 5.4) aus einer hinterlegten Zuordnungsliste (10) von Paaren (7) aus erstem und zweitem Feld (5.1, 5.2, 5.3, 5.4) ermittelt und abgetastet wird,
- eine Höhendifferenz (h1, h2, h3) zwischen den beiden Feldern (5.1, 5.2, 5.3, 5.4) der Codierung (1) festgestellt wird und
- aus der Höhendifferenz (h1, h2, h3) ein paarbezogener Vergleichswert (v) gewonnen wird, der zur Identifikation herangezogen wird, indem der Vergleichswert (v) mit einem paarbezogenen Erwartungswert (e) verglichen wird und bei Übereinstimmung die positive Identifikation angenommen wird.

11. Verfahren nach Anspruch 10, bei dem mindestens zwei Paare (7) der Codierung (1) abgetastet werden.

12. Verfahren nach einem der Ansprüche 10 oder 11, bei dem mindestens fünf Paare (7) vorhanden sind, aus denen die abzutastenden Paare (7) zufällig ausgewählt werden.

13. Verfahren nach Anspruch 12, bei dem die Auswahl des zuerst zu prüfenden Felds (5.1, 5.2, 5.3, 5.4) des Paars (7) zufällig erfolgt.

## Claims

1. A blank for making dental moulds, wherein the blank has a blank body (2) made of dental restoration material from which the mould to be created can be fashioned by a tool (4) by removal of material, wherein the blank on part of the surface (6) of the blank body (2) has a coding (1) with at least one structure (8, 9) for identifying the blank, wherein the coding (1) is made up of several fields (5.1) of the surface (6) of the blank body (2) and of several fields (5.2, 5.3) with a flat structure (8, 9) with at least one height (h1, h2) differentiable from the surface (6) of the blank body (2), wherein the fields (5.2, 5.3) with structure (8, 9) enclose part of the fields (5.1) of the surface (6) or at least partially surround them, and wherein the coding (1) contains at least one field (5.2) with structure (8, 9) with a first height difference (h1) with respect to the surface (6) and at least one field (5.3) with structure (8, 9) with a second height difference (h2) with respect to the surface (6) **characterized by** at least one field (5.2) with structure (8, 9) with a first height difference (h1) with respect to the surface (6) being adjacent to at least one field (5.3) with structure (8, 9) with a second height difference (h2) with respect to the surface (6), wherein the two fields (5.2, 5.3) with structure (8, 9) form a pair (7) in such a way that there is a pair-based height difference (h3).

2. The blank according to claim 1, **characterized by** the structure (8, 9) having a flat recess (8) opposite the surface (6), wherein the recess (8) has a floor (8.1) which is at least approximately parallel to the surface (6).

3. The blank according to claim 1, **characterized by** the structure (8, 9) having a flat elevation (9) relative to the surface (6), wherein the elevation (9) has an upper surface (9.1) which is at least approximately parallel to the surface (6).

4. The blank according to one of claims 1 to 3, **characterized by** each field (5.2, 5.3) with structure (8, 9) being adjacent to at least one field (5.1) of the surface (6).

5. The blank according to one of claims 1 to 4, **characterized by** the coding (1) having at least one field (5.4) which is only adjacent to fields (5.1, 5.2, 5.3, 5.4) of the same type.

6. The blank according to one of claims 1 to 5, **characterized by** each structure (8, 9) having a surface area of between 0.05 mm² and 10 mm².

7. The blank according to one of claims 1 to 6, **characterized by** the height (h1, h2) of each structure (8, 9) being differentiable from the surface (6) of the blank body (2) measuring no more than 500 µm.

8. The blank according to one of claims 1 to 7, **characterized by** the blank body (2) being arranged on a holder (3) and the coding (1) being located at the holder end of the blank body (2).

9. The blank according to one of claims 1 to 8, **characterized by** the coding (1) having at least five fields (5.2, 5.3) with structure (8, 9).

10. A procedure for identifying a blank according to one of claims 1 to 9, wherein the coding (1) is scanned in such a way that
- at least a first field (5.1, 5.2, 5.3, 5.4) of the coding (1) is scanned by the tool or calibration pin being positioned on the x,y plane centrally in front of a particular field (5.1, 5.2, 5.3, 5.4) of the coding (1), or in front of any or of a randomly selected field (5.1, 5.2, 5.3, 5.4) of the coding (1), whose x,y position is given by the previously known positioning of the tool or calibration pin in the x,y plane, that
- starting from the first field (5), a second field (5.1, 5.2, 5.3, 5.4) from a stored assignment list of pairs (7) made up of the first and a second field (5.1, 5.2, 5.3, 5.4) is determined and scanned,
- a height difference (h1, h2) between the two fields (5.1, 5.2, 5.3, 5.4) of the coding (1) is determined, and
- from the height difference (h1, h2, h3), a pair-based comparative value (v) is obtained which is used for identification as the comparative value (v) is compared with a pair-based expected value (e), and positive identification is assumed in the event of agreement.

11. Procedure according to claim 10, wherein at least two pairs (7) of the coding (1) are scanned.

12. Procedure according to one of claims 10 or 11, in which at least five pairs (7) are present from which the pairs (7) to be scanned are randomly selected.

13. A procedure according to claim 12 in which selection of the first field (5.1, 5.2, 5.3, 5.4) to be checked of the pair (7) takes place on a random basis.

## Revendications

1. Ebauche pour la fabrication de pièces façonnées dentaires, l'ébauche présentant un corps (2) d'ébauche en matériau de restauration dentaire, à partir duquel la pièce façonnée à fabriquer peut être façonnée par enlèvement de matière au moyen d'un outil (4), l'ébauche présentant un codage (1) réalisé sur une partie de la surface (6) du corps (2) de l'ébauche, présentant au moins une structure (8, 9) pour l'identification de l'ébauche, le codage (1) étant formé de plusieurs zones (5.1) de surface (6) du corps (2) d'ébauche et de plusieurs zones (5.2, 5.3) présentant une structure plane (8, 9) présentant une hauteur (h1, h2) distinguable au moins par rapport à la surface (6) du corps (2) d'ébauche, les zones (5.2, 5.3) présentant la structure (8, 9) enfermant une partie des zones (5.1) de la surface (6) ou les entourant au moins partiellement et le codage (1) contenant au moins une zone (5.2) présentant la structure (8, 9) présentant une première différence de hauteur (h1) par rapport à la surface (6) et au moins une zone (5.3) présentant la structure (8, 9) présentant une deuxième différence de hauteur (h2) par rapport à la surface (6), **caractérisée en ce qu'**au moins une zone (5.2) présentant la structure (8, 9) présentant une première différence de hauteur (h1) par rapport à la surface (6) est adjacente à au moins une zone (5.3) présentant la structure (8, 9) présentant une deuxième différence de hauteur (h2) par rapport à la surface (6), les deux zones (5.2, 5.3) présentant la structure (8, 9) formant une paire telle qu'il existe une différence de hauteur (h3) par paire.

2. Ebauche selon la revendication 1, **caractérisée en ce que** la structure (8, 9) est un creux plan (8) par rapport à la surface (6), le creux (8) présentant un fond (8.1) qui est au moins approximativement parallèle à la surface (6).

3. Ebauche selon la revendication 1, **caractérisée en ce que** la structure (8, 9) est une élévation plane (9) par rapport à la surface (6), l'élévation (9) présentant un toit (9.1) qui est au moins approximativement parallèle à la surface (6).

4. Ebauche selon une des revendications 1 à 3, **caractérisée en ce que** chaque zone (5.2, 5.3) présentant la structure (8, 9) est adjacente à au moins une zone (5.1) de la surface (6).

5. Ebauche selon une des revendications 1 à 4, **caractérisée en ce que** le codage (1) présente au moins une zone (5.4) qui est uniquement adjacente à des zones (5.1, 5.2, 5.3, 5.4) du même type.

6. Ebauche selon une des revendications 1 à 5, **caractérisée en ce que** chaque structure (8, 9) présente une surface entre 0,05 mm² et 10 mm².

7. Ebauche selon une des revendications 1 à 6, **caractérisée en ce que** la hauteur (h1, h2) distinguable par rapport à la surface (6) du corps (2) d'ébauche de chaque structure (8, 9) est d'au maximum 500 µm.

8. Ebauche selon une des revendications 1 à 7, **caractérisée en ce que** le corps (2) d'ébauche est disposé sur un support (3) et le codage (1) est disposé au niveau de l'extrémité côté support du corps (2) d'ébauche.

9. Ebauche selon une des revendications 1 à 8, **caractérisée en ce que** le codage (1) présente au moins cinq zones (5.2, 5.3) présentant la structure (8, 9).

10. Procédé pour l'identification d'une ébauche selon une des revendications 1 à 9, le balayage du codage (1) étant réalisé de manière telle que
- au moins une première zone (5.1, 5.2, 5.3, 5.4) du codage (1) est balayée, en ce que l'outil ou une tige de calibrage est positionné(e) de manière centrale sur le plan x-y devant une zone déterminée (5.1, 5.2, 5.3, 5.4) du codage (1) ou devant une zone (5.1, 5.2, 5.3, 5.4) quelconque ou choisie de manière aléatoire du codage (1), dont la position x-y est donnée par le positionnement connu au préalable de l'outil ou de la tige de calibrage dans le plan x-y,
- partant de la première zone (5), une deuxième zone (5.1, 5.2, 5.3, 5.4) d'une liste d'attribution (10) consignée de paires (7) de première et deuxième zones (5.1, 5.2, 5.3, 5.4) est déterminée et balayée,
- une différence de hauteur (h1, h2, h3) entre les deux zones (5.1, 5.2, 5.3, 5.4) du codage (1) est déterminée et
- une valeur comparative (v) relative à une paire est obtenue à partir de la différence de hauteur (h1, h2, h3) et est utilisée pour l'identification, en ce que la valeur comparative (v) est comparée à une valeur escomptée (e) relative à une paire et l'identification positive est acceptée en cas de concordance.

11. Procédé selon la revendication 10, dans lequel au moins deux paires (7) du codage (1) sont balayées.

12. Procédé selon une des revendications 10 ou 11, dans lequel il existe au moins cinq paires (7) parmi lesquelles les paires à balayer (7) sont choisies de manière aléatoire.

13. Procédé selon la revendication 12, dans lequel le choix de la zone (5.1, 5.2, 5.3, 5.4) à tester en premier lieu de la paire (7) est réalisé de manière aléatoire.
